# EUROPÄISCHE PATENTSCHRIFT

(11) **EP 2 488 813 B1**
(45) Veröffentlichungstag und Bekanntmachung des Hinweises auf die Patenterteilung: **29.11.2017**
(21) Anmeldenummer: 10707014.6
(22) Anmeldetag: 04.03.2010
(51) Int. Cl.: F28D 1/047, F28F 1/22, F28F 13/00, F28F 21/04, F24J 2/04, F24J 2/05, F24J 2/50, F24J 2/54

(54) **ENERGIEWANDLERVORRICHTUNG ZUR VERWENDUNG ALS SOLARKOLLEKTOR ODER ALS HEIZKÖRPER**
ENERGY CONVERTER DEVICE FOR USE AS A SOLAR COLLECTOR OR A RADIATOR
DISPOSITIF CONVERTISSEUR D'ÉNERGIE POUR UNE UTILISATION COMME COLLECTEUR SOLAIRE OU COMME CORPS DE CHAUFFAGE

(30) Priorität: 12.10.2009 CZ 20090673
(43) Veröffentlichungstag der Anmeldung: 22.08.2012
(73) Patentinhaber: Kout.Cz GmbH, 80803 München (DE)
(72) Erfinder: KOUT, Milan, 54101 Trutnov (CZ)
(74) Vertreter: Weickmann & Weickmann PartmbB
(86) Internationale Anmeldenummer: PCT/EP2010/052751
(87) Internationale Veröffentlichungsnummer: WO 2011/045086

(56) Entgegenhaltungen:
- WO-A1-97/11321
- DE-A1- 19 740 644
- GB-A- 2 024 066
- JP-A- 57 000 455
- US-A- 4 018 211
- US-A- 4 252 108
- US-A1- 2003 000 567

## Beschreibung

Die Erfindung betrifft eine Energiewandlervorrichtung nach dem Oberbegriff des Anspruchs 1, die als Solarkollektor und in einigen Ausführungsformen alternativ als Heizkörper bzw. Radiator verwendbar ist. Ein solcher Solarkollektor ist bekannt aus US 4,018,211; ein Heizkörper nach dem Oberbegriff des ersten Anspruchs ist bekannt aus GB 2 024 066. umfasst wenigstens einen Basiskörper mit einer Vorderseite und einer Rückseite und eine mit dem Basiskörper in Verbindung stehende Wärmeträgerleitungseinrichtung zur Zuleitung und Ableitung eines Wärmeträgermediums zu bzw. von dem Basiskörper.
Es sind verschiedene Solaranlagen mit diversen Solarkollektorbauformen bekannt, z.B. Flachkollektoren mit metallischen Absorberkörpern und im Wesentlichen flachen Absorptionsflächen. Bekannt sind auch Solarkollektoren mit gewellter Absorberfläche. Aufwendigere Solaranlagen umfassen lichtbrechende optische Komponenten, wie etwa Linsensysteme zur Fokussierung von Sonnenstrahlung auf Absorptionsbereiche, die thermisch gut an Leitungen angekoppelt sind, durch die ein Wärmeträgermedium, z. B. Wasser, strömt. Solche Solarkollektoren mit besonderen Optimierungsmaßnahmen zur Steigerung des Wirkungsgrades haben sich als sehr aufwendig und teuer in der Herstellung erwiesen. Kostengünstigere konventionelle Solarkollektoren einfacherer Bauart haben üblicherweise einen nicht optimierten Wirkungsgrad und wirken oft unansehnlich bzw. beeinträchtigen das Aussehen eines Gebäudes, an dem sie z. B. auf dem Dach angebracht sind, in erheblicher Weise.
Aufgabe der vorliegenden Erfindung ist es, eine Energiewandlervorrichtung der eingangs genannten Art bereitzustellen, welche einen vergleichsweise großen Wirkungsgrad bei der Umsetzung der Energie der einfallenden Sonnenstrahlung in Wärme des Basiskörpers bzw. des damit thermisch gut gekoppelten Wärmeträgermediums aufweist und insbesondere als Designelement bei der Gestaltung von Gebäuden, insbesondere Gebäudehüllen, Trennwänden, Wand-, Decken- und Bodenoberflächen, freistehenden Mauern und dgl. verwendbar ist, um solche Bauwerke optisch-gestalterisch aufzuwerten.

Zur Lösung dieser Aufgabe wird erfindungsgemäß vorgeschlagen, dass bei einer Energiewandlervorrichtung der eingangs genannten Art der Basiskörper eine Vielzahl nebeneinander angeordneter Poren aufweist, die zumindest zur Basiskörpervorderseite hin für Strahlung offen sind.

Derartige Poren können z. B. kanälchenförmige Löcher in der Vorderseite des Basiskörpers sein, wobei die Regelmäßigkeit des Lochmusters, die Variabilität der Lochdurchmesser, der Lochumfangsformen, der Lochtiefen und der Richtungen der Lochachsen in einem gewissen Rahmen frei gestaltet werden können, um ein gewünschtes Design zu erhalten und eine gute technische Funktion zu gewährleisten. So kann z. B. ein regelmäßiges Lochraster mit gleichförmigen Löchern, etwa Löchern mit Kreisquerschnitt und gleichen Durchmessern gewählt werden. Im Kontrast dazu kann jedoch auch ein vom Lochbild her eher ungeordnetes und ungleichmäßiges Design gewählt werden, falls dies dem Nutzer besser gefallen sollte. Vorzugsweise sollte die Porentiefe mindestens 5 mm, besonders bevorzugt mindestens 10 mm betragen.

Aufgrund der vielen Poren in der der Sonnenstrahlung auszusetzenden Vorderseite des Basiskörpers kann dessen Absorptionsfläche im Vergleich zur vollkommen glatten oder ggf. gewellten Absorptionsfläche konventioneller Solarkollektoren erheblich vergrößert werden, so dass auch ein entsprechend größerer Wirkungsgrad erzielt werden kann. Dabei können die Löcher im physikalischen Sinne zumindest tendenziell Hohlraumabsorbereigenschaften haben, wobei sehr gute Absorption erzielbar ist, wenn die Strahlung leicht schräg zur Lochachse einfällt. Dem kann durch eine entsprechende Einbausituation Rechnung getragen werden.

Ein besonders ästhetischer Effekt wird erzielt, wenn der Basiskörper Poren in Form von Kanälchen aufweist, von denen zumindest einige den Basiskörper durchgehend von der Vorderseite zur Rückseite durchsetzen, so dass sie Licht durch den Basiskörper hindurchleiten können. Bei dieser Variante wird eine Ausgestaltung bevorzugt, bei der die Kanälchen kreisförmigen, durchgehend konstanten Querschnitt haben und achsparallel sind und der Basiskörper eine große Porendichte, d. h. Porenanzahl pro Oberflächeneinheit aufweist. Auch für eine solche bevorzugte Ausführungsform der Erfindung gilt, dass zur Erzielung eines guten Absorptionswirkungsgrades der Basiskörper so orientiert sein sollte, dass die Sonnenstrahlung leicht schräg zu den Längsachsen der Kanälchen einfällt. Streulicht mit Fortpflanzungsrichtung parallel zu den Längsachsen der Kanälchen kann den Basiskörper durchdringen, so dass dieser sich dem Betrachter als in gewisser Weise durchsichtig darbietet. Mit solchen Basiskörpern ausgestattete Solarkollektoren eignen sich in ganz besonderer Weise als mehrfach funktionelle Gestaltungselemente beim Baukörperdesign. Gute Ergebnisse wurden erzielt mit Basiskörpern mit kreiszylinderförmigen Durchgangsporen, die einen Durchmesser im Bereich von 1 mm bis 10 mm haben und bei denen die Abstände zwischen benachbarten Durchgangsporen zwischen 0,2 mm und 5 mm betragen.

Der Basiskörper der vorstehend angesprochenen bevorzugten Ausführungsform der Energiewandlervorrichtung kann in einer speziellen Variante z. B. eine Wabenstruktur aus flächig angeordneten sechseckigen Hohlräumen mit entsprechenden Zwischenwänden aufweisen. Auch trichterförmige Poren können vorgesehen sein.

Vorzugsweise sollten mehr als 50 % der Poren, wenn nicht gar alle Poren den Basiskörper durchgehend von der Vorderseite zur Rückseite durchsetzen, so dass sie Licht durch den Basiskörper hindurchleiten können. Auch sollte die Summe der Lochquerschnitte pro Flächeneinheit der Basiskörpervorderseite in der bevorzugten Ausführungsform der Erfindung größer als 50% sein.

Die absorbierende Oberfläche des Basiskörpers sollte ein möglichst großes Absorptionsvermögen haben, etwa durch Schwärzung der Oberfläche.

Die Wärmeträgerleitungseinrichtung umfasst in einer bevorzugten Ausführungsform der Erfindung wenigstens ein rohrförmiges Fluidleitungselement, das an seinem Umfang mit dem Basiskörper in wärmeübertragendem Kontakt steht. Das Fluidleitungselement kann außen an dem Basiskörper in gut wärmeübertragendem Kontakt mit diesem angeordnet sein. Vorzugsweise durchsetzt das rohrförmige Fluidleitungselement den Basiskörper jedoch, wodurch eine besonders gute thermische Ankopplung des Fluidleitungselementes bzw. des im Betrieb darin strömenden Wärmeträgermediums an den Basiskörper erzielbar ist. Das Fluidleitungselement kann auch ein integraler Teil des Basiskörpers sein, etwa ein darin ausgebildeter Kanal.

Ein anderes Konzept der Wärmeübertragung wird bei einer Ausführungsform der Energiewandlervorrichtung nach der Erfindung angewandt, nämlich das Konzept des Umströmens des Basiskörpers mit dem Wärmeträgermedium. Hierzu weist die Wärmeträgerleitungseinrichtung eine Durchflusskammer mit einem Zulaufanschluss und einem Ablaufanschluss für die Zuleitung und Ableitung von Wärmeträgermedium auf, wobei der wenigstens eine Basiskörper in der Durchflusskammer angeordnet ist, so dass er von Wärmeträgermedium umspült werden kann, welches die Durchflusskammer durchströmt, wobei die Durchflusskammer zumindest in ihrem der Basiskörpervorderseite benachbarten Bereich lichtdurchlässig ist. Dazu sollte das Wärmeträgermedium zumindest teillichtdurchlässig sein, damit Sonnenstrahlung vom Basiskörper absorbiert und die dabei umgesetzte Energie an das Wärmeträgermedium als Wärme abgegeben werden kann. Eine spezielle Variante der letztgenannten Ausführungsform zeichnet sich dadurch aus, dass die Poren in der oben erläuterten Weise den Basiskörper durchgehend von der Vorderseite zur Rückseite durchsetzen und die Strömung des Wärmeträgermediums durch diese Poren hindurchgeleitet wird. Dabei wird erreicht, dass einerseits eine gute Strahlungsabsorption und gleichzeitig eine sehr gute Wärmeankopplung des Wärmeträgermediums an dem Basiskörper stattfindet.

Das Wärmeträgermedium kann ein flüssiges Medium oder ein gasförmiges Medium sein. Als gasförmiges Medium kommt insbesondere Luft in Frage. Dabei kann es sich z. B. um Luft handeln, die als aufgewärmte Raumluft einem Raum unmittelbar zugeführt wird, wobei ein Ventilator für die Luftbewegung sorgen kann. Alternativ kann das den Basiskörper umströmende Wärmeträgermedium eine Flüssigkeit sein, etwa Wasser.

Der Basiskörper ist gemäß einer Ausführungsform der Erfindung aus einem keramischen Material hergestellt, welches gute Wärmespeichereigenschaften haben sollte. Ausführungsformen der Erfindung, bei denen der Basiskörper aus keramischem Material besteht und als zumindest teilweise freiliegendes Wand- oder Oberflächenelement im Raum angeordnet ist, tragen auch zu einem ausgeglichenen Feuchtehaushalt in dem Raum bei. Es kommen alternativ oder in Kombination dazu und miteinander jedoch auch andere Materialien für die Realisierung des Basiskörpers in Frage, etwa Kunststoffe oder Metall, wie Kupfer oder Aluminium.

Gemäß einer weiteren Ausgestaltung der Erfindung ist der Basiskörper an seiner Vorderseite mit wenigstens einer angeschrägten Fläche ausgestaltet.

Zum Schutz des Basiskörpers kann zumindest vor der Basiskörpervorderseite eine lichtdurchlässige Scheibe, insbesondere Glasscheibe angeordnet sein. Besser noch sollte der wenigstens eine Basiskörper gemäß einer Variante der Erfindung in einem Gehäuse untergebracht sein, das an der Basiskörpervorderseite und an der Basiskörperrückseite jeweils lichtdurchlässig ausgebildet ist und vorzugsweise Glasscheiben aufweist. Zur Vermeidung von Wärmeverlusten sollten die lichtdurchlässigen Scheiben des Gehäuses einen Abstand vom Basiskörper haben.

Die Abstände zwischen dem Basiskörper und benachbarten Scheiben werden vorzugsweise durch Abstandshalteelemente aufrechterhalten, die auch bei höheren Temperaturen formstabil und z.B. durchsichtig sind. Sie können aus Polymermaterialien gebildet sein. Energiewandlervorrichtungen nach der Erfindung sind vorzugsweise als selbsttragende Bauelemente ausgebildet, die bei Bedarf auf einfache Weise aneinander angeschlossen werden können. Insbesondere kann es zum Zwecke der besseren Wärmeisolierung des Basiskörpers vorgesehen sein, dass der ihn umgebende Hohlraum des Gehäuses evakuiert ist, also ein Vakuum aufweist.

Die lichtdurchlässige Scheibe an der Vorderseite des Basiskörpers kann spezielle lichtbrechende Elemente z. B. zur Fokussierung von Sonnenlicht auf den Basiskörper bzw. in die Poren umfassen.

Gemäß einer weiteren Ausführungsform der Erfindung hat das Gehäuse wenigstens zwei durch Abstandshalter voneinander separierte lichtdurchlässige Scheiben an der Basiskörpervorderseite und/oder an der Basiskörperrückseite. Auf diese Weise wird eine relativ gute Wärmeisolierung geschaffen, die einen Verlust der im Basiskörper gespeicherten Wärme nach außen hin vermindert. Zwischen den vorzugsweise als Glasplatten ausgebildeten lichtdurchlässigen Scheiben sind z. B. Abstandshalter vorgesehen, die z. B. aus Polymeren bestehen können.

Eine mechanisch robuste Variante der Energiewandlervorrichtung nach der Erfindung ist insbesondere als selbsttragendes Bauelement ausgebildet und hat ein Gehäuse, das an der Basiskörpervorderseite und/oder an der Basiskörperrückseite außenseitig eine Verbundglasscheibe mit Verfestigungsfolie bzw. Splitterschutzfolie aufweist. Gemäß einer weiteren Ausführungsform der Erfindung ist der wenigstens eine Basiskörper so in einem Rahmen beweglich gelagert, dass seine Orientierung relativ zu dem Rahmen änderbar ist. Auf diese Weise kann somit der Basiskörper dem Einfall der Sonnenstrahlung angepasst nachgeführt werden, um stets eine optimale Absorption oder im gelegentlichen Bedarfsfall eine minimale Absorption, dafür aber eine bessere Lichtdurchlässigkeit zu erzielen. Die Energiewandlervorrichtung nach der Erfindung kann z. B. zur Raumlufterwärmung oder zur Brauchwassererwärmung verwendet werden. Sie kann auch in eine Wärmetauschereinrichtung integriert werden, wobei die Wärmeträgerleitungseinrichtung einen Kreislauf für das Wärmeträgermedium bildet.

Gemäß einer Ausführungsform der Erfindung ist der wenigstens eine Basiskörper mit mindest einer fotovoltaischen Zelle ausgestattet, so dass aus der Sonnenstrahlung auch elektrische Energie gewonnen werden kann.

Gegenstand der Erfindung ist ferner eine Solaranlage mit wenigstens einer Energiewandlervorrichtung nach einem der Ansprüche 1 - 16 als Solarkollektor.

Grundsätzlich kann aufgrund der großen Wärmeübertragungsfläche des Basiskörpers die Energiewandlervorrichtung auch als effizienter Heizkörper, insbesondere Radiator verwendet werden. In diesem Fall wird durch die Wärmeträgerleitungseinrichtung ein anderweitig, etwa elektrisch oder durch Verbrennungswärme aufgeheiztes Wärmeträgermedium durch die Wärmeträgerleitungseinrichtung gepumpt, welches den Basiskörper auf eine höhere Temperatur erwärmt, so dass dieser Wärme an seine Umgebung abgeben kann. Auch in diesem Fall kann es vorteilhaft sein, dass zumindest ein Teil der aufzuwärmenden Luft Kanälchen des Basiskörpers durchströmt. Vorteilhaft für diesen Anwendungsfall wäre es, wenn der mindestens eine Basiskörper der zu erwärmenden Luft unmittelbar ausgesetzt würde, also nicht durch ein Gehäuse thermisch abgeschirmt wäre.

Gegenstand der Erfindung ist auch eine Heizungsanlage mit wenigstens einer Energiewandlervorrichtung nach einem der Patentansprüche 1 - 16 als Heizkörper, insbesondere Radiator.

Die Erfindung wird im Folgenden unter Bezugnahme auf die Zeichnungen näher erläutert.
- Fig. 1: zeigt in einer schematischen Vorderansicht ein erstes Ausführungsbeispiel einer Energiewandlervorrichtung nach der Erfindung.
- Fig. 2: zeigt in einer Schnittseitenansicht mit der in Fig. 1 bei II-II angedeuteten Schnittebene eine Energiewandlervorrichtung des in Fig. 1 gezeigten Bautyps.
- Fig. 3 - 8: zeigen in entsprechenden Schnittseitenansichten weitere Ausführungsbeispiele von Energiewandlervorrichtungen nach der Erfindung.
- Fig. 9: zeigt einen Basiskörper mit daran angeordneter fotovoltaischer Zelle.
- Fig. 10: zeigt in einer Vorderansicht ein Ausführungsbeispiel einer Energiewandlervorrichtung nach der Erfindung mit mehreren Basiskörpern gemäß Fig. 9.

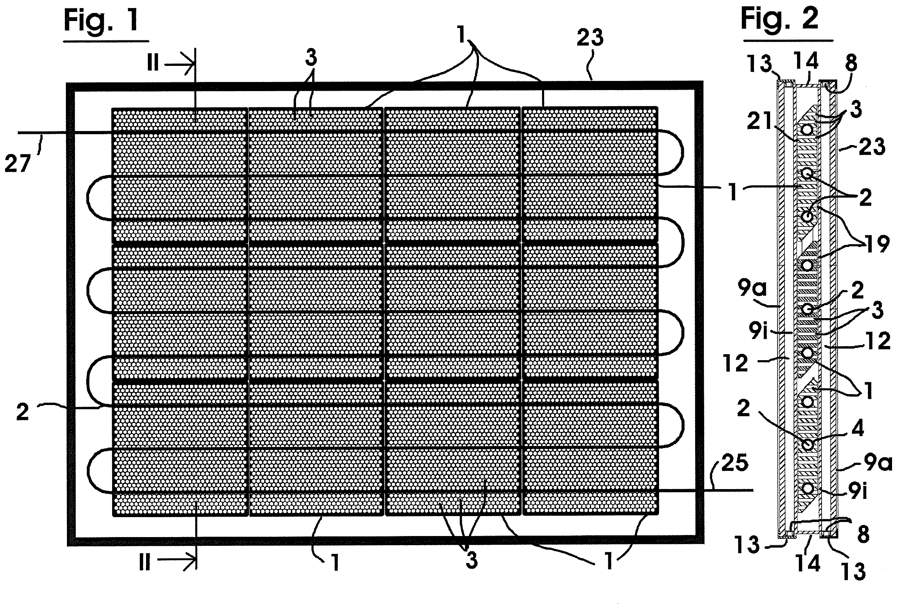

Die Energiewandlervorrichtung gemäß Fig. 1 weist eine Vielzahl von Basiskörpern (Akkukörpern) 1 aus einem keramischen Material auf. Die Basiskörper 1 haben eine Vielzahl von Poren 3, die als kanälchenförmige Löcher 3 die Basiskörper 1 durchgehend von deren Vorderseite 19 zu deren Rückseite 21 durchsetzen. Die durchgängigen Poren 3 bilden in jedem Basiskörper 1 ein geordnetes Lochmuster mit einer relativ großen Anzahl von Löchern pro Flächeneinheit der Vorderseite 19. Im Beispielsfall haben die Löcher 3 bei der realisierten Ausführungsform gleiche Durchmesser von ca. 4 mm, wobei die Lochachsen parallel zueinander und senkrecht zur Vorderseite und zur Rückseite des Gehäuses 23 stehen. Die Lochdichte beträgt etwa 500 Löcher pro Quadratdezimeter. Wie in Fig. 1 angedeutet ist, ist die Basiskörperstruktur aufgrund der durchgängigen Poren 3 lichtdurchlässig bzw. bei einem Blick in Richtung senkrecht zu den Lochachsen partiell durchsichtig.

Eine Leitungsschlange 2 für die Durchleitung eines Wärmeträgermediums durchsetzt die Basiskörper 1 quer zu den Längsachsen der durchgängigen Poren 3, wobei Leitungsdurchführungskanäle 4 in den Basiskörpern 1 vorgesehen sind, in denen die im Beispielsfall als Schlauch ausgebildete Leitungsschlange 2 größtenteils aufgenommen ist, so dass sie einen guten thermischen Kontakt zu den Basiskörpern 1 hat.

Die aneinander angefügten und in der Vorderansicht rechteckigen bzw. quadratischen Basiskörper 1 sind in dem lichtdurchlässigen Gehäuse 23 untergebracht, wobei dieses sowohl an der Vorderseite 19 als auch an der Rückseite 21 der Basiskörper 1 angeordnete Glasplatten 9 aufweist, wie dies in Fig. 2 zu erkennen ist. In dem ersten Ausführungsbeispiel gemäß Fig. 2 sind die Basiskörper 1 vermittels kleiner (nicht erkennbarer) Abstandshalter aus formstabilem, transluzentem Polymermaterial zwischen zwei inneren Glasscheiben 9i eingefasst, welche vermittels Abstandshalter 8 von äußeren Glasscheiben 9a separiert sind, so dass vorderseitig und rückseitig jeweils ein wärmeisolierender Zwischenraum 12 zwischen den Glasscheibenpaaren 9i, 9a verbleibt. In diesem Zwischenraum können z. B. Feuchteaufnehmer untergebracht sein, etwa in Form von längsgelochten Buchsen, in denen sich Feuchteabsorptionssplitt befindet. Zwischenräume 12 können ggf. evakuiert sein. Die umfänglichen Schmalseiten des Gehäuses 23 sind durch Abschlussplatten 13 und Verbindungsplatten 14 gebildet.

Zumindest die vorderseitige äußere Glasplatte 9a, vorzugsweise beide äußeren Glasplatten 9a sind aus einem Verbundglas mit Befestigungsfolie gebildet, um eine mechanisch robuste Konstruktion zu gewährleisten. Die Energiewandlervorrichtung nach Fig. 1 bildet ein Paneel, welches allein oder in Zusammenschaltung mit mehreren weiteren gleichartigen Paneelen in eine Solaranlage integriert werden kann. Es wird an den Anschlüssen 25, 27 an zuleitende bzw. ableitende Wärmeträgerleitungen angeschlossen.

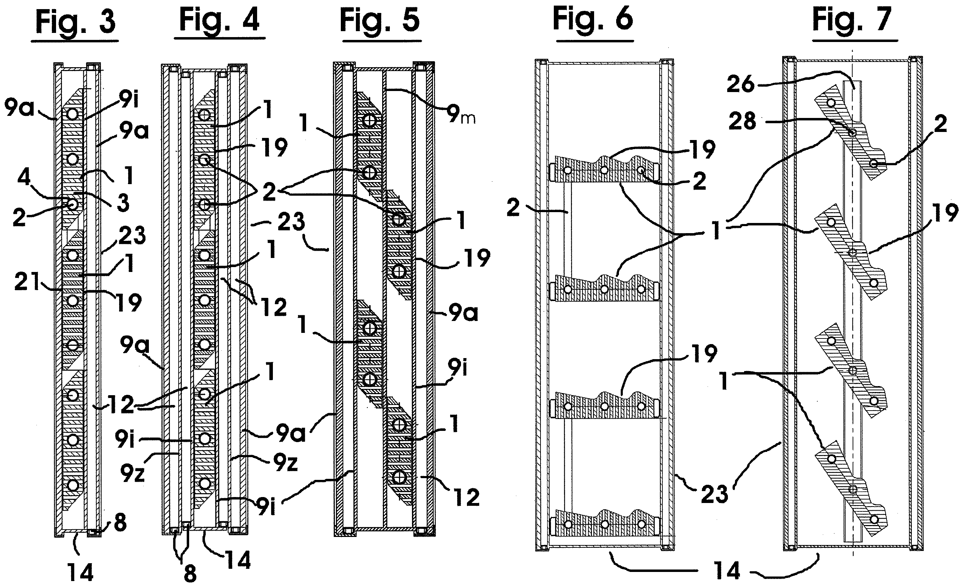

Nachstehend werden die Ausführungsbeispiele gemäß den Fig. 3 - 10 erläutert, wobei Merkmale, die in den diversen Ausführungsbeispielen gleiche Struktur oder/und gleiche Funktion haben, mit gleichen Bezugszeichen in den Figuren gekennzeichnet sind. Es kann daher zum Verständnis dieser Merkmale weitgehend auf die Beschreibung des ersten Ausführungsbeispiels gemäß Fig. 1 und gemäß Fig. 2 Bezug genommen werden, so dass sich die weiteren Erläuterungen im Wesentlichen auf die Unterschiede zwischen den Ausführungsbeispielen beschränken können.

In Fig. 3 weist das Gehäuse 23 an der Rückseite 21 der Basiskörper 1 lediglich eine Glasscheibe, nämlich eine Verbundglasscheibe 9a auf.

Das Ausführungsbeispiel gemäß Fig. 4 unterscheidet sich von dem Ausführungsbeispiel gemäß Fig. 2 dadurch, dass ein zusätzliches Paar innerer Glasscheiben 9z vorgesehen ist, wobei die Glasscheiben 9z durch Abstandshalter 8 jeweils von der benachbarten inneren Glasscheibe 9i und der benachbarten äußeren Glasscheibe 9a unter Bildung von Zwischenräumen 12 separiert ist. Auf diese Weise kann eine noch bessere Wärmeisolierung der Basiskörper 1 zur Außenumgebung erreicht werden. Einzelne oder mehrere Zwischenräume 12 können evakuiert sein, um die Wärmedämmung noch zu steigern.

In dem Ausführungsbeispiel gemäß Fig. 5 sind die Basiskörper 1 in ihrer Folge von oben nach unten abwechselnd nach hinten und nach vorn versetzt, wobei eine mittlere Glasscheibe 9m die in den beiden unterschiedlichen Versatzebenen angeordneten Basiskörper 1 voneinander separiert. Fig. 5 stellt auf diese Weise ein besonders dekorativ wirkendes Paneel dar.

Fig. 6 zeigt ein Ausführungsbeispiel einer Energiewandlervorrichtung nach der Erfindung mit Basiskörpern 1, die im Unterschied zu den bisher erläuterten Ausführungsbeispielen nicht hochkant in aufrechter Stellung, sondern quer zwischen den flächigen Außenwänden des Gehäuses 23 angeordnet sind, so dass deren Vorderseiten 19 in der vertikalen Aufstellung des Paneels gemäß Fig. 6 nach oben orientiert sind, wobei auch die Durchgangsbohrungen 3 vertikal ausgerichtet sind. Ferner ist noch darauf hinzuweisen, dass die Oberseite 19 wellig ausgebildet ist, um die Strahlungsabsorptionsoberfläche zu vergrößern. Es sei darauf hingewiesen, dass die gezeigten Paneele z. B. bei Anbringung auf einem Schrägdach nicht unbedingt die gezeigte vertikale Aufstellung haben müssen, sondern in einer Schrägstellung montiert sein können.

Bei dem Ausführungsbeispiel gemäß Fig. 7 sind die Basiskörper 1 an einem Rahmenelement 26 drehbar gelagert, wobei die Drehachsen 28 parallel zueinander in einer gemeinsamen vertikalen Mittenebene liegen. Ein nicht gezeigter Drehmechanismus erlaubt die gesteuerte Drehbewegung der Basiskörper 1, so dass sie z. B. aus einer Stellung, wie sie in Fig. 6 die dort gezeigten Basiskörper 1 einnehmen, in eine Schrägstellung gemäß Fig. 7 oder auch darüber hinaus verdreht werden können. Die Porenstruktur der Basiskörper 1 ist in Fig. 7 aus Gründen der zeichnerischen Vereinfachung nicht dargestellt. Die Verdrehbarkeit der Basiskörper 1 in Fig. 7 erlaubt somit ein vom Sonnenstand abhängiges Verstellen der Basiskörper 1, um möglichst viel Sonnenlicht absorbieren zu können.

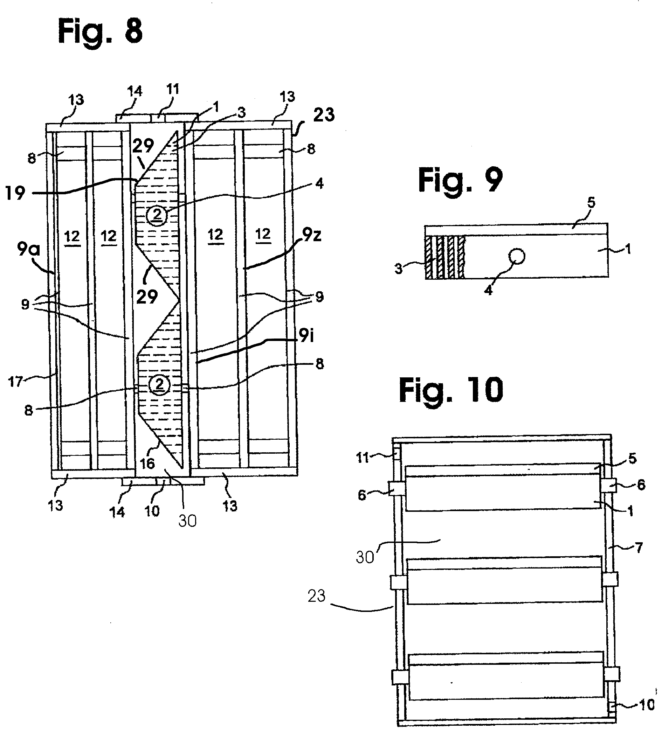

Bei dem Ausführungsbeispiel gemäß Fig. 8 sind die Basiskörper 1 an ihren Vorderseiten 19 mit Schrägflächen 29 versehen, um die Strahlungsabsorptionsfläche noch weiter zu vergrößern. Im Beispielsfall der Fig. 8 ist in der unteren Verbindungsplatte 14 wenigstens eine Zuleitungsöffnung 10 ausgeführt, welche darin einströmende Luft in den von den Basiskörpern 1 aufgewärmten Bereich 30 einleiten kann. In der oberen Verbindungsplatte 14 ist eine Ableitungsöffnung 11 ausgeführt. An diese Öffnungen können Rohre zur Zuleitung der zu erwärmenden Luft und zur Ableitung der angewärmten Luft zur weiteren Nutzung angeschlossen werden. Der innere Bereich 30 bildet somit eine Durchflusskammer mit den Anschlüssen 10 und 11.

In Fig. 9 ist schematisch eine Ausführungsform eines Basiskörpers 1 mit einer daran vorgesehenen fotovoltaischen Zelle 5 gezeigt. In einer Solarspeicheranlage mit einem solchen Basiskörper 1 kann auch die Restwärmeenergie aus der fotovoltaischen Zelle 5 genutzt werden, so dass außer Stromgewinnung auch Wassererwärmung und Lichtdurchlass stattfinden kann. Gemäß Fig. 10 können solche kombinierten Elemente 1, 5 auf Drehbolzen 6 in einem Gehäuse 23 je nach Einfallswinkel der Sonnenstrahlen gedreht werden. Auch im Beispielsfall der Fig. 10 sind die Basiskörper 1 vorzugsweise aus keramischem Material gefertigt, um eine ausreichende Wärmespeicherung zu gewährleisten.

Nachzutragen ist noch, dass die Anschlussöffnungen 10 und 11 bei entsprechenden Ausführungsformen auch für die Durchleitung eines flüssigen Wärmeträgermediums durch eine Durchflusskammer 30 ausgestaltet sein können, wobei in diesem Falle die Leitungsschlangen 2 ggf. entbehrlich sind, da die zu erwärmende Flüssigkeit die Basiskörper 1 umspült. Dieses Konzept kann noch in nicht gezeigter Weise verbessert werden, wenn dafür gesorgt wird, dass die Wärmeträgerströmung so geführt wird, dass das Wärmeträgermedium auch die Durchgangsporen 3 durchströmt.

Eine Solaranlage nach der Erfindung kann je nach technischer Ausführung durch effiziente Nutzung der Sonnenenergie zur Erwärmung des Wärmeträgermediums, also etwa Wasser oder Luft, verwendet werden und in der Spezialausführungsform gemäß Fig. 9 und 10 auch zur Gewinnung elektrischer Energie dienen. Die Energiewandlervorrichtungen können als Dach- oder Wandpaneele installiert werden, wobei die darin gebildeten Durchgangsporen Licht unter verschiedenen Winkeln durchlassen. Energiewandlervorrichtungen nach der Erfindung können daher z. B. als lichtdurchlässige Dachelemente oder Wandelemente genutzt werden und insbesondere auch als Dekorationsgegenstände mit technischer Funktion Verwendung finden.

## Patentansprüche

1. Energiewandlervorrichtung zur Verwendung als Solarkollektor oder als Heizkörper, umfassend wenigstens einen Basiskörper (1) mit einer Vorderseite (19) und einer Rückseite (21) und eine mit dem Basiskörper (1) in Verbindung stehende Wärmeträgerleitungseinrichtung (2) zur Zuleitung und Ableitung eines Wärmeträgermediums zu bzw. von dem Basiskörper (1), wobei der wenigstens eine Basiskörper (1) eine Vielzahl nebeneinander angeordneter Poren (3) aufweist, **dadurch gekennzeichnet, dass** der wenigstens eine Basiskörper (1) in einem Gehäuse (23) untergebracht ist, das an der Basiskörpervorderseite (19) und an der Basiskörperrückseite (21) jeweils lichtdurchlässig ausgebildet ist, dass die Poren (3) zumindest zur Basiskörpervorderseite (19) hin offen sind und die Form von Kanälchen aufweisen, von denen zumindest einige den Basiskörper (1) durchgehend von der Vorderseite (19) zur Rückseite (21) durchsetzen, so dass sie Licht durch den Basiskörper (1) hindurchleiten können, dass die Wärmeträgerleitungseinrichtung (2) ein rohrförmiges Fluidleitungselement umfasst, das an seinem Umfang mit dem Basiskörper (1) in wärmeübertragendem Kontakt steht, dass die Wärmeträgerleitungseinrichtung (2) eine Durchflusskammer (30) mit einem Zulaufanschluss (10) und einem Ablaufanschluss (11) für die Zuleitung und Ableitung von Wärmeträgermedium aufweist und dass der wenigstens eine Basiskörper (1) in der Durchflusskammer (30) angeordnet ist, so dass er von Wärmeträgermedium umspült werden kann, welches die Durchflusskammer (30) durchströmt, wobei die Durchflusskammer lichtdurchlässig ist.

2. Energiewandlervorrichtung nach Anspruch 1, **dadurch gekennzeichnet, dass** mehr als 50 % der Poren (3) den Basiskörper (19) durchgehend von der Vorderseite (19) zur Rückseite (21) durchsetzen, so dass sie Licht durch den Basiskörper (1) hindurchleiten können.

3. Energiewandlervorrichtung nach Anspruch 1 oder 2, **dadurch gekennzeichnet, dass** die kanälchenförmigen Poren (3) parallel zueinander angeordnete Längsachsen aufweisen.

4. Energiewandlervorrichtung nach einem der Ansprüche 1 bis 3, **dadurch gekennzeichnet, dass** die kanälchenförmigen Poren (3) Rundquerschnitt, insbesondere Kreisquerschnitt aufweisen.

5. Energiewandlervorrichtung nach einem der Ansprüche 1 bis 4, **dadurch gekennzeichnet, dass** die kanälchenförmigen Poren (3) durchgehend gleichbleibenden Querschnitt aufweisen.

6. Energiewandlervorrichtung nach nach einem der vorhergehenden Ansprüche, **dadurch gekennzeichnet, dass** das rohrförmige Fluidleitungselement den Basiskörper quer zu den kanälchenförmigen Poren (3) durchsetzt.

7. Energiewandlervorrichtung nach einem der vorhergehenden Ansprüche, **dadurch gekennzeichnet, dass** der Basiskörper (1) aus einer Keramik gebildet ist.

8. Energiewandlervorrichtung nach einem der vorhergehenden Ansprüche, **dadurch gekennzeichnet, dass** das Gehäuse (23) wenigstens zwei durch Abstandshalter (8) voneinander separierte, lichtdurchlässige Scheiben (9i, 9a) an der Basiskörpervorderseite (19) und/oder an der Basiskörperrückseite (21) aufweist.

9. Energiewandlervorrichtung nach einem der vorhergehenden Ansprüchen, **dadurch gekennzeichnet, dass** das Gehäuse (23) an der Basiskörpervorderseite (19) und/oder an der Basiskörperrückseite (21) außenseitig eine Verbundglasscheibe (9a) mit Verfestigungsfolie aufweist.

10. Energiewandlervorrichtung nach einem der vorhergehenden Ansprüche, **dadurch gekennzeichnet, dass** der wenigstens eine Basiskörper (1) so in einem Rahmen (26) beweglich gelagert ist, dass seine Orientierung relativ zu dem Rahmen (26) änderbar ist.

11. Energiewandlervorrichtung nach einem der vorhergehenden Ansprüche, **dadurch gekennzeichnet, dass** der wenigstens eine Basiskörper (1) mindestens ein fotovoltaisches Element (5) aufweist.

12. Solaranlage mit wenigstens einer Energiewandlervorrichtung nach einem der Ansprüche 1 bis 11 als Solarkollektor.

13. Heizungsanlage mit wenigstens einer Energiewandlervorrichtung nach einem der Ansprüche 1 bis 11 als Heizkörper, insbesondere Radiator.

## Claims

1. Energy converter device for use as a solar collector or as a radiator, comprising at least one basic body (1) with a front side (19) and a rear side (21) and with a heat carrier line device (2) in connection with the basic body (1) for the delivery and removal of a heat carrier medium to and from the basic body (1), wherein the at least one basic body (1) comprises a plurality of pores (3) arranged next to one another, **characterized in that** the at least one basic body (1) is accommodated in a housing (23) which is formed such as to be light-permeable on the front side (19) of the basic body and on the rear side (21) of the basic body, that the pores (3) are open at least towards the front side (19) of the basic body and exhibit the form of small channels, of which at least some pass through the basic body (1) from the front side (19) to the rear side (21), such that the light can be conducted through the basic body (1), that the heat carrier line device (2) comprises a tubular fluid line element which is in heat-transfer contact at its circumference with the basic body (1), that the heat carrier line device (2) comprises a flow chamber (30) with an inflow connection (10) and an outflow connection (11) for the delivery and removal of heat transfer medium, and that the at least one basic body (1) is arranged in the flow chamber (30), such that it can be flowed around by heat carrier medium, which flows through the flow chamber (30), wherein the flow chamber is light-permeable.

2. Energy converter device according to claim 1, **characterized in that** more than 50% of the pores (3) pass through the basic body (19) from the front side (19) to the rear side (21), such that they can conduct light through the basic body (1).

3. Energy converter device according to claim 1 or 2, **characterized in that** the pores (3) in the form of small channels exhibit longitudinal axes arranged parallel to one another.

4. Energy converter device according to any one of claims 1 to 3, **characterized in that** the pores (3) in the form of small channels exhibit a round cross-section, in particular a circular cross-section,

5. Energy converter device according to any one of claims 1 to 4, **characterized in that** the pores (3) in the form of small channels exhibit a cross-section which remains consistent throughout.

6. Energy converter device according to any one of the preceding claims, **characterized in that** the tubular fluid line element passes through the basic body transverse to the pores (3) in the shape of small channels.

7. Energy converter device according to any one of the preceding claims, **characterized in that** the basic body (1) is formed from ceramics.

8. Energy converter device according to any one of the preceding claims, **characterized in that** the housing (23) comprises at least two light permeable disks (9i, 9a), separated from one by spacer elements (8), on the basic body front side (19) and/or on the basic body rear side (21).

9. Energy converter device according to any one of the preceding claims, **characterized in that** the housing (23) comprises, on the basic body front side (19) and/or on the basic body rear side (21), on the outside, a composite glass disk (9a) with a securing film.

10. Energy converter device according to any one of the preceding claims, **characterized in that** the at least one basic body (1) is mounted movably in a frame (26) in such a way that its orientation can be changed relative to the frame (26).

11. Energy converter device according to any one of the preceding claims, **characterized in that** the at least one basic body (1) comprises at least one photovoltaic element (5).

12. Solar system with at least one energy converter device according to any one of claims 1 to 11 as a solar collector.

13. Heating system with at least one energy converter device according to any one of claims 1 to 11 as a heating body, in particular as a radiator.

## Revendications

1. Dispositif convertisseur d'énergie destiné à être utilisé en tant que collecteur solaire ou en tant que corps chauffant, comprenant au moins un corps de base (1) avec un côté avant (19) et un côté arrière (21), et un système de guidage de caloporteur (2) relié au corps de base (1) servant à amener en direction du corps de base (1) un milieu caloporteur et à l'évacuer de celui-ci, dans lequel l'au moins un corps de base (1) présente une pluralité de pores (3) disposés les uns à côté des autres, **caractérisé en ce que** l'au moins un corps de base (1) est abrité dans un boîtier (23), qui est réalisé au niveau du côté avant de corps de base (19) et au niveau du côté arrière de corps de base (21) respectivement de manière transparente, que les pores (3) sont ouverts au moins en direction du côté avant de corps de base (19) et présentent la forme de petits canaux, parmi lesquels au moins certains traversent le corps de base (1) en continu du côté avant (19) vers le côté arrière (21) de sorte qu'ils puissent guider de la lumière à travers le corps de base (1), que le système de guidage de caloporteur (2) comprend un élément de guidage de fluide de forme tubulaire, qui est en contact avec transfert de chaleur au niveau de sa périphérie avec le corps de base (1), que le système de guidage de caloporteur (2) présente une chambre de passage de flux (30) avec un raccord d'arrivée (10) et un raccord de sortie (11) pour l'amenée et l'évacuation de milieu caloporteur et que l'au moins un corps de base (1) est disposé dans la chambre de passage de flux (30) de sorte qu'il puisse être rincé par un milieu caloporteur, qui traverse la chambre de passage de flux (30), dans lequel la chambre de passage de flux est transparente.

2. Dispositif convertisseur d'énergie selon la revendication 1, **caractérisé en ce que** plus de 50 % des pores (3) traversent le corps de base (19) en continu depuis le côté avant (19) vers le côté arrière (21) de sorte qu'ils puissent guider de la lumière à travers le corps de base (1).

3. Dispositif convertisseur d'énergie selon la revendication 1 ou 2, **caractérisé en ce que** les pores (3) en forme de petits canaux présentent des axes longitudinaux disposés de manière parallèle les uns par rapport aux autres.

4. Dispositif convertisseur d'énergie selon l'une quelconque des revendications 1 à 3, **caractérisé en ce que** les pores (3) en forme de petits canaux présentent une section transversale ronde, en particulier une section transversale circulaire.

5. Dispositif convertisseur d'énergie selon l'une quelconque des revendications 1 à 4, **caractérisé en ce que** les pores (3) en forme de petits canaux présentent une section transversale constante en continu.

6. Dispositif convertisseur d'énergie selon l'une quelconque des revendications précédentes, **caractérisé en ce que** l'élément de guidage de fluide de forme tubulaire traverse le corps de base de manière transversale par rapport aux pores (3) en forme de petits canaux.

7. Dispositif convertisseur d'énergie selon l'une quelconque des revendications précédentes, **caractérisé en ce que** le corps de base (1) est formé à partir d'une céramique.

8. Dispositif convertisseur d'énergie selon l'une quelconque des revendications précédentes, **caractérisé en ce que** le boîtier (23) présente au niveau du côté avant de corps de base (19) et/ou au niveau du côté arrière de corps de base (21) au moins deux vitres (9i, 9a) transparentes séparées l'une de l'autre par des écarteurs (8).

9. Dispositif convertisseur d'énergie selon l'une quelconque des revendications précédentes, **caractérisé en ce que** le boîtier (23) présente côté extérieur une vitre en verre composite (9a) avec un film de renfort au niveau du côté avant de corps de base (19) et/ou au niveau du côté arrière de corps de base (21).

10. Dispositif convertisseur d'énergie selon l'une quelconque des revendications précédentes, **caractérisé en ce que** l'au moins un corps de base (1) est monté de manière mobile de telle sorte dans un châssis (26) que son orientation peut être modifiée par rapport au châssis (26).

11. Dispositif convertisseur d'énergie selon l'une quelconque des revendications précédentes, **caractérisé en ce que** l'au moins un corps de base (1) présente au moins un élément (5) photovoltaïque.

12. Installation solaire avec au moins un dispositif convertisseur d'énergie selon l'une quelconque des revendications 1 à 11 en tant que collecteur solaire.

13. Installation de chauffage avec au moins un dispositif convertisseur d'énergie selon l'une quelconque des revendications 1 à 11 en tant que corps chauffant, en particulier radiateur.
